# EUROPEAN PATENT APPLICATION

(11) **EP 4 531 476 A1**
(43) Date of publication of application: **02.04.2025**
(21) Application number: 23823118.7
(22) Date of filing: 13.06.2023
(51) Int. Cl.: H04W 72/04

(54) **METHOD AND APPARATUS USED FOR WIRELESS COMMUNICATION**

(30) Priority: 16.06.2022 CN 202210682699
(71) Applicant: SHANGHAI LANGBO COMMUNICATION TECHNOLOGY COMPANY LIMITED, Shanghai 200240 (CN)
(72) Inventor: ZHANG, Xiaobo, Shanghai 201206 (CN)
(74) Representative: Zhang, Fan
(86) International application number: PCT/CN2023/099849
(87) International publication number: WO 2023/241550

(57) **Abstract**

Disclosed in the present invention are a method and apparatus used for wireless communication. The method comprises: a first node sending a first message, which is used for determining a set of candidate patterns; receiving a second message, which is used for indicating a first RS resource group and a first frequency band resource group; and sending first channel information, wherein the first message is used for assisting with determination of a sub-band pattern of the first frequency band resource group, and measurement for the first RS resource group is used for generating the first channel information; and a frequency-domain resource for the first channel information comprises the first frequency band resource group. The present application can improve the performance of first channel information, and also has relatively good compatibility.

## Description

### TECHNICAL FIELD

The present application relates to methods and devices in wireless communication systems, and in particular to a scheme and device for Channel Status Information (CSI) in a wireless communication system.

### BACKGROUND

In traditional wireless communications, UE (User Equipment) reporting may comprise at least one of a variety of auxiliary information, such as CSI (Channel Status Information), Beam Management related auxiliary information, positioning related auxiliary information and so on, where CSI comprises at least one of a CRI (CSI-RS Resource Indicator), an RI (Rank Indicator), a PMI (Precoding Matrix Indicator) or a CQI (Channel quality indicator).

The network equipment selects appropriate transmission parameters for the UE based on the UE reporting, such as a camping cell, an MCS (Modulation and Coding Scheme), a TPMI (Transmitted Precoding Matrix Indicator), a TCI (Transmission Configuration Indication) and other parameters. In addition, the UE reporting can be used to optimize network parameters such as better cell coverage, switching base stations according to UE location, etc.

In an NR (New Radio) system, a priority of CSI report is defined, the priority being used to determine whether to assign CPU (CSI Processing Unit) resources to a corresponding CSI report for updating or whether to drop a corresponding CSI report.

### SUMMARY

As a number of antennas increases, the traditional PMI feedback approaches introduce a large amount of redundancy overhead, therefore, AI (Artificial Intelligence) or ML (Machine Learning) - based CSI compression was projected in NR R (release) 18. In traditional multi-antenna systems, the calculation of CQI is usually conditional on PMI; for example, based on the assumption that the PMI reported by UE (User Equipment) is adopted by the base station, CQI is calculated. The applicant has found through researches that traditional CSI reporting supports sub-band-based PMI reporting, and how AI or ML-based CSI compression can support similar functions will face challenges.

To address the above problem, the present application provides a solution. It should be noted that while a large number of embodiments of the present application are for AI/ML, the present application is also applicable to schemes based on traditional methods such as linear channel reconstruction; in particular, it is considered that specific channel reconstruction algorithms are likely to be non-standardized or self-implemented by hardware equipment vendors. Further, the adoption of a unified UE reporting scheme can reduce implementation complexity or improve performance. If no conflict is incurred, embodiments in any node in the present application and the characteristics of the embodiments are also applicable to any other node, and vice versa. And the embodiments in the present application and the characteristics in the embodiments can be arbitrarily combined if there is no conflict.

Where required, the explanation of the terms in the present application can be referred to the description of 3GPP (3rd Generation Partner Project) specification protocols TS37 series as well as the TS38 series.

The present application provides a method in a first node for wireless communications, comprising:
transmitting a first message, the first message being used to determine a candidate pattern set;
receiving a second message, the second message being used to indicate a first RS (Reference Signal) resource group and a first frequency-band resource group, the first RS resource group comprising at least one RS resource, and the first frequency-band resource group comprising at least one sub-band; and
transmitting first channel information;
herein, the first message is used to assist in determining a sub-band pattern of the first frequency-band resource group, and a measurement of the first RS resource group is used to generate the first channel information; frequency-domain resources which the first channel information is for comprise the first frequency-band resource group.

In one embodiment, the above methods can optimize the configuration of the first frequency-band resource group and improve the reporting efficiency or accuracy of first channel information.

In one embodiment, the first frequency-band resource group belongs to a first BWP (Bandwidth Part).

Specifically, according to one aspect of the present application, the feature of the above method is that the first message is used to indicate a first condition set; the first condition set comprises that a frequency-domain interval of any adjacent two sub-bands is not greater than or less than a first frequency-domain width.

In the above method, the first condition set implicitly indicates the candidate pattern set.

In one embodiment, any candidate pattern in the candidate pattern set satisfies the first condition set.

In one embodiment, the candidate pattern set consists of candidate patterns satisfying the first condition set.

The above method is beneficial to ensure the performance or accuracy of the first channel information, avoiding generator failure of the first channel information incurred by adjacent sub-bands with excessively large intervals.

Specifically, according to one aspect of the present application, the method is characterized in that only if the sub-band pattern of a first frequency-band resource group is one pattern in the candidate pattern set, the performance of the first channel information is guaranteed.

The above method provides flexibility for the configuration of the first frequency-band resource group, that is, the sub-band pattern of the first frequency-band resource group may be a candidate pattern other than the candidate pattern set.

Specifically, according to one aspect of the present application, the feature of the above method is that the candidate pattern set is applicable to a first encoder; herein, the first encoder is used to generate the first channel information, and the measurement for the first RS resource group is used to acquire an input of the first encoder.

Specifically, according to one aspect of the present application, the feature of the above method is that the candidate pattern set is applicable to a first encoder; herein, the first encoder is used to generate the first channel information, and channel parameters for the candidate pattern set are used to train the first encoder.

Specifically, according to one aspect of the present application, the feature of the above method is that the first condition set comprises: a number of sub-band(s) is not less than or greater than a first positive integer.

Specifically, according to one aspect of the present application, the feature of the above method is that the first condition set comprises: a bandwidth covered from a lowest sub-band in frequency domain to a highest sub-band in frequency domain is not greater than or less than a second frequency-domain bandwidth.

The present application provides a method in a second node for wireless communications, comprising:
receiving a first message, the first message being used to determine a candidate pattern set;
transmitting a second message, the second message being used to indicate a first RS resource group and a first frequency-band resource group, the first RS resource group comprising at least one RS resource, the first frequency-band resource group comprising at least one sub-band; and
receiving first channel information;
herein, the first message is used to assist in determining a sub-band pattern of the first frequency-band resource group, and a measurement of the first RS resource group is used to generate the first channel information; frequency-domain resources which the first channel information is for comprise the first frequency-band resource group.

Specifically, according to one aspect of the present application, the feature of the above method is that the first message is used to indicate a first condition set; the first condition set comprises that a frequency-domain interval of any adjacent two sub-bands is not greater than or less than a first frequency-domain width.

The present application provides a first node for wireless communications, comprising:
a first transmitter, transmitting a first message, the first message being used to determine a candidate pattern set; transmitting first channel information; and
a first receiver, receiving a second message, the second message being used to indicate a first RS resource group and a first frequency-band resource group, the first RS resource group comprising at least one RS resource, the first frequency-band resource group comprising at least one sub-band;
herein, the first message is used to assist in determining a sub-band pattern of the first frequency-band resource group, and a measurement of the first RS resource group is used to generate the first channel information; frequency-domain resources which the first channel information is for comprise the first frequency-band resource group.

The present application provides a second node for wireless communications, comprising:
a second receiver, receiving a first message, the first message being used to determine a candidate pattern set; receiving first channel information; and
a second transmitter, transmitting a second message, the second message being used to indicate a first RS resource group and a first frequency-band resource group, the first RS resource group comprising at least one RS resource, the first frequency-band resource group comprising at least one sub-band;
herein, the first message is used to assist in determining a sub-band pattern of the first frequency-band resource group, and a measurement of the first RS resource group is used to generate the first channel information; frequency-domain resources which the first channel information is for comprise the first frequency-band resource group.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of communications of a first node according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of hardware modules of a communication node according to one embodiment of the present application;
FIG. 5 illustrates a flowchart of transmission between a first node and a second node according to one embodiment of the present application;
FIG. 6 illustrates a schematic diagram of a candidate pattern according to one embodiment of the present application;
FIG. 7 illustrates a schematic diagram of an artificial intelligence processing system according to one embodiment of the present application;
FIG. 8 illustrates a schematic diagram of a transmission of first channel information according to one embodiment of the present application;
FIG. 9 illustrates a schematic diagram of a first encoder according to one embodiment of the present application;
FIG. 10 illustrates a schematic diagram of a first function according to one embodiment of the present application;
FIG. 11 illustrates a schematic diagram of a decoding layer group according to one embodiment of the present application;
FIG. 12 illustrates a structure block diagram of a processor in a first node according to one embodiment of the present application;
FIG. 13 illustrates a structure block diagram of a processor in a second node according to one embodiment of the present application;
FIG. 14 illustrates a flowchart of a measurement in a first RS resource group according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

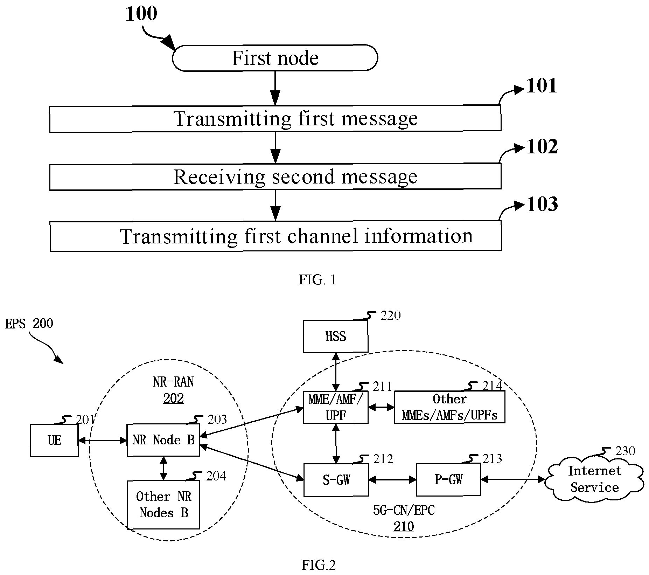

Embodiment 1 illustrates a flowchart of communications of a first node according to one embodiment of the present application, as shown in FIG. 1.

A first node 100 transmits a first message in step 101, the first message is used to determine a candidate pattern set; receives a second message in step 102, the second message is used to indicate a first RS resource group and a first frequency-band resource group, the first RS resource group comprises at least one RS resource, and the first frequency-band resource group comprises at least one sub-band; transmits first channel information in step 103.

In embodiment 1, the first message is used to assist in determining a sub-band pattern of the first frequency-band resource group, and a measurement of the first RS resource group is used to generate the first channel information; frequency-domain resources which the first channel information is for comprise the first frequency-band resource group.

Typically, the candidate pattern set comprises at least one candidate pattern.

In one embodiment, the sub-band pattern or a candidate pattern in the candidate pattern set refers to a frequency-domain location of a sub-band.

In one embodiment, the sub-band pattern or a candidate pattern in the candidate pattern set refers to a frequency-domain location of a sub-band in a BWP to which it belongs.

In one embodiment, the sub-band pattern refers to a bitstring, and each bit in the bitstring indicates whether a corresponding sub-band is configured.

In one embodiment, any candidate pattern in the candidate pattern set refers to a bitstring, where each bit in the bitstring indicates whether a corresponding sub-band is configured.

In one embodiment, the sub-band pattern and a candidate pattern in the candidate pattern set respectively refer to a bitstring, where each bit in the bitstring indicates whether a corresponding sub-band is configured.

In one embodiment, a signaling used to configure the bitstring is a field of an RRC IE.

In one embodiment, a name of the field of the RRC IE includes csi-ReportingBand.

In one embodiment, the field of the RRC IE is csi-ReportingBand.

In one embodiment, the first message is generated at the physical layer.

In one embodiment, the first message is Uplink Control Information (UCI).

In one embodiment, the first message is transmitted on a Physical Uplink Control CHannel (PUCCH).

In one embodiment, the first message is transmitted on a Physical Uplink Shared CHannel (PUSCH).

In one embodiment, the first message comprises a Medium Access Control (MAC) Control Element (CE).

In one embodiment, the first message comprises an RRC (Radio Resource Control) IE (Information Element).

In one embodiment, a channel information being for a frequency-domain resource comprises: the channel information indicates parameters of a channel on the frequency-domain resource.

In one embodiment, a channel information being for a frequency-domain resource comprises: the channel information is calculated based on an assumption that a radio signal is transmitted on the frequency-domain resource.

In one embodiment, a channel information being for a frequency-domain resource comprises: channel parameters on the frequency-domain resource are used to generate the channel information.

In one embodiment, a channel information being for a frequency-domain resource comprises: the channel information is used to recover a pre-coding matrix for each sub-band on the frequency-domain resource.

In one embodiment, the channel parameters comprise a raw channel matrix.

In one embodiment, the channel parameters comprise a channel eigenvector.

In one embodiment, the channel parameters comprise a channel impulse response.

In one embodiment, the second message is used to configure the at least first channel information.

In one embodiment, the second message is a higher-layer signaling.

In one embodiment, the second message comprises an RRC signaling.

In one embodiment, the second message comprises a CSI-ReportConfig IE (Information Element).

In one embodiment, the first channel information is used to determine a phase, amplitude, or coefficient between at least two antenna ports.

In one embodiment, the first channel information is used to determine at least one eigenvector for each sub-band in the first frequency-band resource group.

In one embodiment, the first channel information is used to determine at least one eigenvalue for each sub-band in the first frequency-band resource group.

In one embodiment, the first channel information is used to determine a precoding matrix for each sub-band in the first frequency-band resource group.

In one embodiment, the first RS resource group comprises at least one downlink RS resource used for channel measurement.

In one subembodiment of the above embodiment, the first RS resource group comprises at least one downlink RS resource used for an interference measurement.

In one embodiment, a measurement of the first RS resource group comprises a channel measurement performed in the at least one downlink RS resource used for a channel measurement.

In one embodiment, a measurement of the first RS resource group comprises an interference measurement performed in the at least one downlink RS resource used for an interference measurement.

In one embodiment, any RS resource in the first RS resource group is a downlink RS resource.

In one embodiment, any RS resource in the first RS resource group is a Channel state information Reference signal (CSI-RS) resource.

In one embodiment, the second message is used to determine that frequency-domain resources which the first channel information is for are the first frequency-band resource group.

In one embodiment, the first RS resource group is indicated by resourcesForChannelMeasurement, csi-IM-ResourcesForInterference, or nzp-CSI-RS-ResourcesForInterference in the second message.

In one embodiment, the first frequency-band resource group is indicated by csi-ReportingBand in the second message.

In one embodiment, any sub-band in the first frequency-band resource group comprises at least one Physical Resource Block (PRB).

In one embodiment, the first frequency-band resource group belongs to a first BWP (Bandwidth Part).

In one embodiment, except for an outermost sub-band in the first BWP, a number of PRBs comprised in all sub-bands in the first frequency-band resource group is P1, P1 being a positive integral multiple of 4.

In one embodiment, P1 is indicated by a higher-layer signaling.

In one embodiment, P1 is related to a number of PRBs comprised in the first BWP.

In one embodiment, if the first frequency-band resource group comprises a first one of sub-band(s) in the first BWP, a number of PRB(s) comprised in the first one of sub-band(s) is P1- (Ns mod P1), where Ns is an index of a starting PRB in the first BWP; if the first frequency-band resource group comprises a last sub-band in the first BWP, a number of PRB(s) comprised in the last sub-band is (Ns+Nw) mod P1 or P1, where Nw is a number of PRB(s) comprised in the first BWP.

In one embodiment, P1 is one of 4, 8, 16, or 32.

In one embodiment, the first channel information comprises multiple channel information.

In one embodiment, the multiple channel information is transmitted on a physical-layer channel.

In one embodiment, the physical-layer channel is a PUSCH (Physical Uplink Shared Channel).

In one embodiment, the physical-layer channel is a PUCCH (Physical Uplink Control Channel).

In one embodiment, the multiple channel information comprises a matrix indication used for precoding and a CQI for each sub-band in the first frequency-band resource group.

In one embodiment, the matrix indication used for precoding is non-codebook.

In one embodiment, how to determine a sub-band pattern of the first frequency-band resource group is self-determined by the second node (for example, according to scheduling policy or scheduling result), and a sub-band pattern of the first frequency-band resource group belongs to the candidate pattern set.

In one embodiment, the phrase that the first message is used to assist in determining a sub-band pattern of the first frequency-band resource group includes: only when the sub-band pattern of a first frequency-band resource group is one pattern in the candidate pattern set, the performance of the first channel information is guaranteed.

In one embodiment, the performance of the first channel information means the accuracy of the first channel information.

In one embodiment, the performance of the first channel information refers to an error between channel parameters indicated by the first channel information or channel parameters recovered based on the first channel information and actual channel parameters.

For channel matrices or eigenvectors, common errors can be described by NMSE (Normalized Mean Square Error) or Cosine Similarity; for CQI, the error can be calculated by counting the NACK rate.

In one embodiment, the phrase that the first message is used to assist in determining a sub-band pattern of the first frequency-band resource group includes: the candidate pattern set is applicable to a first encoder; herein, the first encoder is used to generate the first channel information, and the measurement for the first RS resource group is used to acquire an input of the first encoder.

In one embodiment, the first encoder is obtained based on training.

In one embodiment, the first encoder is a nonlinear function.

In one embodiment, how to determine a sub-band pattern of the first frequency-band resource group is self-determined by the second node (for example, according to a scheduling policy or scheduling result), and the phrase that the first message is used to assist in determining a sub-band pattern of the first frequency-band resource group includes: the second node assists in determining the sub-band pattern of the first frequency-band resource group according to the first message.

It should be noted that the above embodiment does not restrict the second node to select the sub-band pattern of the first frequency-band resource group from the candidate pattern set, and the second node can still be configured with "a sub-band pattern of the first frequency-band resource group not belonging to the candidate pattern set" according to scheduling needs (for example, occasionally) and bear corresponding performance loss.

In one embodiment, how to determine a sub-band pattern of the first frequency-band resource group is self-determined by the second node (for example, according to a scheduling policy or scheduling result), the phrase that the first message is used to assist in determining a sub-band pattern of the first frequency-band resource group includes: the second node refers to the first message when determining the sub-band pattern of the first frequency-band resource group.

In one embodiment, the phrase that the first message is used to determine a candidate pattern set includes: the first message indicates at least one candidate pattern from a candidate pattern pool to consist the candidate pattern set.

In one embodiment, the first message is used to indicate a first condition set; the first condition set comprises that a frequency-domain interval of any adjacent two sub-bands is not greater than or less than a first frequency-domain width.

In one embodiment, the first message indicates the first frequency-domain width.

In general, a first frequency-domain width is associated with radio channel characteristics, so a range of a radio channel to which a generator of first channel information is applicable can be indicated by the first frequency-domain width.

In one embodiment, the first frequency-domain width is measured by PRB (Physical Resource Block).

In one embodiment, the first frequency-domain width is measured by 4 PRBs.

In one embodiment, the first frequency-domain width is measured by 8 PRBs (Physical Resource Blocks).

In one embodiment, the first frequency-domain width is measured by sub-band.

In one embodiment, a subcarrier spacing corresponding to the PRB or the sub-band is fixed.

In one embodiment, a subcarrier spacing corresponding to the PRB or the sub-band varies with a frequency range to which the first frequency-band resource group belongs.

In one embodiment, when a frequency Range to which the first frequency-band resource group belongs is frequency Range 1, a subcarrier spacing corresponding to the PRB or the sub-band is a first subcarrier spacing; when a frequency Range to which the first frequency-band resource group belongs is frequency Range 2, a subcarrier spacing corresponding to the PRB or the sub-band is a second subcarrier spacing; the first subcarrier spacing is less than the second subcarrier spacing.

In one embodiment, the first subcarrier spacing is 15kHz, and the second subcarrier spacing is 60kHz.

In one embodiment, the PRB or a subcarrier spacing corresponding to the sub-band is a subcarrier spacing of a first BWP, and the first frequency-band resource group belongs to the first BWP.

In one embodiment, the first frequency-domain width is measured by MHz.

In one embodiment, only when the sub-band pattern of the first frequency-band resource group satisfies the first condition set, the first channel information is used to monitor the performance of the first encoder.

In one embodiment, the behavior of monitoring of the performance of the first encoder is executed at the first node.

In one embodiment, the behavior of monitoring of the performance of the first encoder is executed at the second node.

In one embodiment, the behavior of monitoring of the performance of the first encoder includes: using an output of the first encoder to recover channel parameters and determining the performance of the first encoder according to an error between the recovered channel parameters and reference channel parameters.

In one embodiment, the channel parameters comprise channel matrix, or eigenvector, or channel impulse response, etc.

In one embodiment, the reference channel parameters are a raw channel matrix obtained based on measuring RS resources, or an eigenvector calculated according to a raw channel matrix, or a raw channel impulse response.

In one embodiment, any candidate pattern in the candidate pattern set satisfies the first condition set.

In the above embodiment, the first message does not explicitly indicate a candidate pattern set, but indicates a first condition set for a supported or recommended sub-band configuration to achieve implicitly indicating a candidate pattern set. A sub-band configuration that satisfies the first condition set belongs to the candidate pattern set.

In one embodiment, the first condition set comprises: a number of sub-band(s) is not less than or greater than a first positive integer.

In one embodiment, the first message indicates the first positive integer.

The above method avoids the performance loss of the first channel information incurred by a small number of sub-bands.

In one embodiment, the first condition set comprises: a bandwidth covered from a lowest sub-band in frequency domain to a highest sub-band in frequency domain is not greater than or less than a second frequency-domain bandwidth.

The above method avoids the performance loss of the first channel information incurred by the over-wide frequency band.

The above embodiments for the units of the first frequency-domain width can be applied to a unit of the second frequency-domain bandwidth without further elaboration.

### Embodiment 2

Embodiment 2 illustrates a schematic diagram of a network architecture according to one embodiment of the present application, as shown in FIG. 2. FIG. 2 illustrates the system architecture of 5G NR (NewRadio), LTE (Long Term Evolution), and LTE-A (Long Term Evolution Advanced). The 5G NR or LTE network architecture 200 may be called a 5G System/Evolved Packet System (5GS/EPS) 5 or other appropriate terms. The EPS 200 may comprise UE 201, an NG-RAN 202, an Evolved Packet Core/ 5G-Core Network(EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will readily understand that various concepts presented throughout the present application can be extended to networks providing circuit switching services or other cellular networks. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPSs), multimedia devices, video devices, digital audio players (for example, MP3 players), cameras, game consoles, unmanned aerial vehicles (UAV), aircrafts, narrow-band Internet of Things (loT) devices, machine-type communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field (AMF)/ User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212, the S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application, and the gNB 203 corresponds to the second node in the present application.

In one embodiment, the UE201 supports generating reports using AI (Artificial Intelligence) or Machine Learning.

In one embodiment, the UE 201 supports using training data to generate a trained model or using trained data to generate partial parameters in the trained model.

In one embodiment, the UE201 supports determining at least partial parameters of a CNN (Conventional Neural Networks) used for CSI reconstruction by training.

In one embodiment, the UE 201 is a terminal supporting Massive-MIMO.

In one embodiment, the gNB 203 supports a transmission based on Massive-MIMO.

In one embodiment, the gNB 203 supports decompressing CSI using AI or deep learning.

In one embodiment, the gNB 203 is a MarcoCellular base station.

In one embodiment, the gNB 203 is a Micro Cell base station.

In one embodiment, the gNB 203 is a PicoCell base station.

In one embodiment, the gNB 203 is a Femtocell.

In one embodiment, the gNB 203 is a base station that supports large delay differences.

In one embodiment, the gNB 203 is a flight platform.

In one embodiment, the gNB 203 is satellite equipment.

In one embodiment, the first node and the second node in the present application are respectively the UE 201 and the gNB 203.

### Embodiment 3

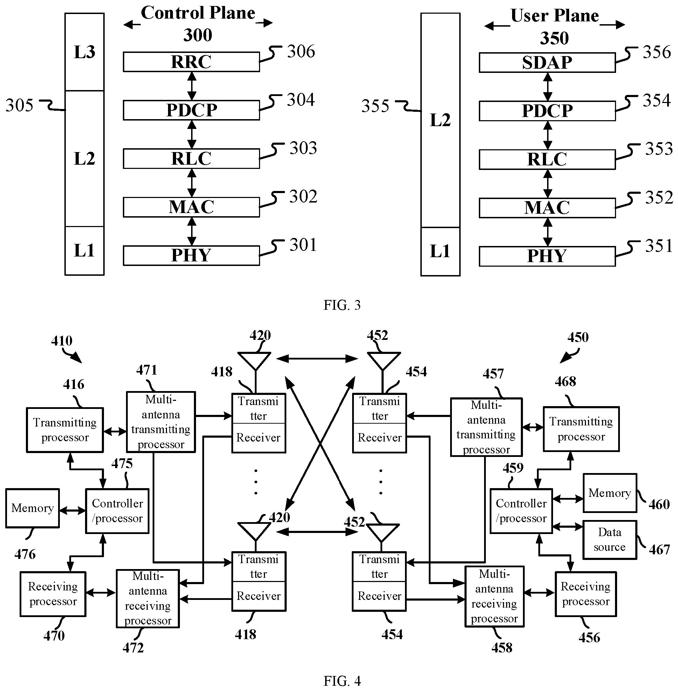

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first node (UE or RSU in V2X, vehicle equipment or On-Board Communication Unit) and a second node (gNB, UE or RSU in V2X, vehicle equipment or On-Board Communication Unit), or between two UEs is represented by three layers, which are respectively layer 1, layer 2 and layer 3. The layer 1 (L1) is the lowest layer and performs signal processing functions of various PHY layers. The L1 is called PHY 301 in the present application. The layer 2 (L2) 305 is above the PHY 301, and is in charge of the link between the first node and the second node, and between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All the three sublayers terminate at the second nodes. The PDCP sublayer 304 provides data encryption and integrity protection and provides support for handover of a first node between second nodes. The RLC sublayer 303 provides segmentation and reassembling of a packet, retransmission of a lost data packet through ARQ, as well as repeat data packet detection and protocol error detection. The MAC sublayer 302 provides mapping between a logic channel and a transport channel and multiplexing of the logical channel. The MAC sublayer 302 is also responsible for allocating between first nodes various radio resources (i.e., resource block) in a cell. The MAC sublayer 302 is also responsible for HARQ operations. In the control plane 300, the RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first node may comprise several higher layers above the L2 305, such as a network layer (i.e., IP layer) terminated at a P-GW of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first reference signal in the present application is generated by the PHY 301.

In one embodiment, the first channel information in the present application is generated by the PHY 301.

In one embodiment, the first channel information in the present application is generated by the MAC sublayer 302.

In one embodiment, the first CQI in the present application is generated by the PHY 301.

In one embodiment, the first message in the present application is generated by the RRC sublayer 306.

In one embodiment, the first message in the present application is generated by the MAC sublayer 302.

### Embodiment 4

Embodiment 4 illustrates a schematic diagram of hardware modules of a communication node according to one embodiment of the present application, as shown in FIG. 4. FIG. 4 is a block diagram of a first communication device 450 in communication with a second communication device 410 in an access network.

The first communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

In a transmission from the second communication device 410 to the first communication device 450, at the first communication device 410, a higher layer packet from the core network is provided to a controller/ processor 475. The controller/processor 475 provides a function of the L2 layer. In the transmission from the second communication device 410 to the first communication device 450, the controller/ processor 475 provides header compression, encryption, packet segmentation and reordering, and multiplexing between a logical channel and a transport channel, and radio resources allocation for the first communication device 450 based on various priorities. The controller/ processor 475 is also responsible for retransmission of a lost packet and a signaling to the first communication device 450. The transmitting processor 416 and the multi-antenna transmitting processor 471 perform various signal processing functions used for the L1 layer (that is, PHY). The transmitting processor 416 performs channel coding and interleaving so as to ensure an FEC (Forward Error Correction) at the second communication device 450, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multi-carrier symbol streams. After that the multi-antenna transmitting processor 471 performs transmission analog precoding/beamforming on the time-domain multi-carrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the second communication device 410 to the first communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the first communication device-targeted spatial stream. Symbols on each spatial stream are demodulated and recovered in the receiving processor 456 to generate a soft decision. Then the receiving processor 456 de-interleaves and channel decodes the soft decision to recover the higher-layer data and control signal transmitted on the physical channel by the second communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In the transmission from the second communication device 410 to the second node 450, the controller/ processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing.

In a transmission from the first communication device 450 to the second communication device 410, at the second communication device 450, the data source 467 is configured to provide a higher-layer packet to the controller/processor 459. The data source 467 represents all protocol layers above the L2 layer. Similar to a transmitting function of the second communication device 410 described in the transmission from the second communication device 410 to the first communication device 450, the controller/processor 459 performs header compression, encryption, packet segmentation and reordering, and multiplexing between a logical channel and a transport channel based on radio resources allocation so as to provide the L2 layer functions used for the user plane and the control plane. The controller/processor 459 is also responsible for retransmission of a lost packet, and a signaling to the second communication device 410. The transmitting processor 468 performs channel coding, interleaving, and modulation mapping. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the first communication device 450 to the second communication device 410, the controller/processor 475 provides de-multiplexing between a transport channel and a logical channel, packet reassembling, decryption, header decompression, control signal processing so as to recover a higher-layer packet from the UE 450. The higher-layer packet coming from the controller/processor 475 may be provided to the core network.

In one embodiment, the first communication device 450 comprises: at least one processor and at least one memory. The at least one memory comprises computer program codes; the at least one memory and the computer program codes are configured to be used in collaboration with the at least one processor, the first communication device 450 at least: transmits a first message, the first message is used to determine a candidate pattern set; transmits first channel information; receives a second message, the second message being used to indicate a first RS resource group and a first frequency-band resource group, the first RS resource group comprising at least one RS resource, the first frequency-band resource group comprising at least one sub-band; herein, the first message is used to assist in determining a sub-band pattern of the first frequency-band resource group, and a measurement of the first RS resource group is used to generate the first channel information; frequency-domain resources which the first channel information is for comprise the first frequency-band resource group.

In one embodiment, the first communication device 450 comprises at least one processor and at least one memory. a memory that stores a computer readable instruction program. The computer readable instruction program generates an action when executed by at least one processor. The action includes: transmitting the first message; transmitting the first channel information; receiving the second message.

In one embodiment, the second communication device 410 comprises at least one processor and at least one memory. The at least one memory comprises computer program codes; the at least one memory and the computer program codes are configured to be used in collaboration with the at least one processor. The second communication device 410 at least: receives a first message, the first message is used to determine a candidate pattern set; receives first channel information; transmits a second message, the second message is used to indicate a first RS resource group and a first frequency-band resource group, the first RS resource group comprises at least one RS resource, the first frequency-band resource group comprises at least one sub-band; herein, the first message is used to assist in determining a sub-band pattern of the first frequency-band resource group, and a measurement of the first RS resource group is used to generate the first channel information; frequency-domain resources which the first channel information is for comprise the first frequency-band resource group.

In one embodiment, the second communication device 410 comprises a memory that stores a computer readable instruction program. The computer readable instruction program generates an action when executed by at least one processor. The action includes: receiving the first message; receiving the first channel information; transmitting the second message.

In one embodiment, the first communication device 450 corresponds to a first node in the present application.

In one embodiment, the second communication device 410 corresponds to a second node in the present application.

In one embodiment, the first communication device 450 is a UE, and the second communication device 410 is a base station.

In one embodiment, the antenna 452, the receiver 454, the multi-antenna receiving processor 458, and the receiving processor 456 are used for the measurement for the first RS resource group.

In one embodiment, the controller/processor 459 is used for the measurement for the first RS resource group.

In one embodiment, the controller/processor 459 is used to generate the at least first channel information.

In one embodiment, the antenna 452, the transmitter 454, the multi-antenna transmitting processor 457, the transmitting processor 468, and the controller/processor 459 are used to transmit the at least first channel information.

In one embodiment, the antenna 420, the transmitter 418, the multi-antenna transmitting processor 471, and the transmitting processor 416 are used to transmit a reference signal on at least one RS resource in the first RS resource group.

In one embodiment, the controller/processor 475 is used to transmit a reference signal on at least one RS resource in the first RS resource group.

In one embodiment, the antenna 420, the receiver 418, the multi-antenna receiving processor 472, the receiving processor 470 and the controller/ processor 475 is used to receive the at least first channel information.

### Embodiment 5

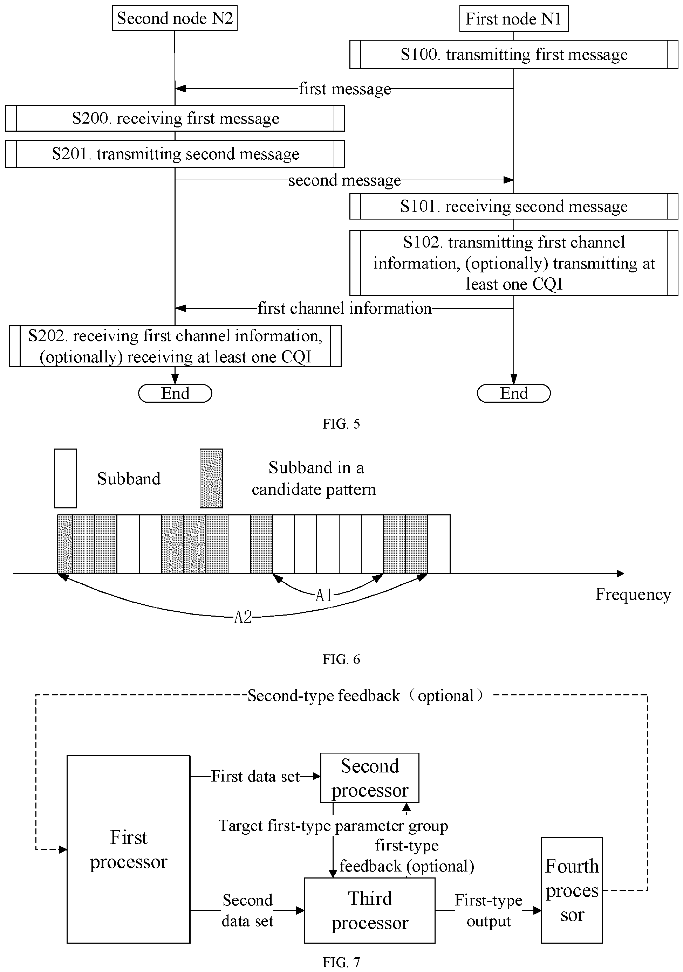

Embodiment 5 illustrates a flowchart of transmission between a first node and a second node, as shown in FIG. 5. In FIG. 5, transmission and reception of the at least one CQI is optional.

The first node N1 transmits a first message in step S100, the first message is used to determine a candidate pattern set; receives a second message in step S101, the second message is used to indicate a first RS resource group and a first frequency-band resource group, the first RS resource group comprises at least one RS resource, the first frequency-band resource group comprises at least one sub-band; transmits first channel information in step S102;
The second node N02 receives the first message in step S200; transmits the second message in step S201; receives the first channel information in step S202;
in embodiment 5, the first message is used to assist in determining a sub-band pattern of the first frequency-band resource group, and a measurement of the first RS resource group is used to generate the first channel information; frequency-domain resources which the first channel information is for comprise the first frequency-band resource group.

In one embodiment, the first message comprises at least partial parameters of each encoder in a first encoder; the candidate pattern set is applicable to the first encoder; herein, the first encoder is used to generate the first channel information, and the measurement for the first RS resource group is used to acquire an input of the first encoder.

In one embodiment, a sub-band pattern corresponding to channel parameters used to train the first encoder belongs to the candidate pattern set.

In one embodiment, a sub-band pattern corresponding to channel parameters used to train the first encoder satisfies the first condition set.

Channel parameters used for training the first encoder are obtained by a measurement for downlink RS resources. In one embodiment, the above channel parameters used for training the first encoder comprise a raw channel matrix, a channel impulse response, or an eigenvector.

In one subembodiment of the above embodiment, the first message is a MAC CE.

In one subembodiment of the above embodiment, the first message is an RRC IE.

In one subembodiment of the above embodiment, the first message is transmitted on a physical-layer channel.

The above embodiments or sub-embodiments enable the candidate pattern set to be associated with the at least first encoder to ensure the performance of the at least first encoder.

In one embodiment, as a response to training of the at least one encoder being completed, the first message is transmitted.

In one embodiment, the at least first encoder comprises multiple encoders, and the first encoder is one of the multiple encoders.

In one embodiment, the at least first encoder only comprises the first encoder.

In one embodiment, only when the sub-band pattern of the first frequency-band resource group belongs to the candidate pattern set, the first channel information is used to monitor the performance of the first encoder.

In one embodiment, the first channel information is non-codebook based.

In one embodiment, a channel information is non-codebook-based comprises: the channel information is generated based on artificial intelligence or machine learning.

In one embodiment, a channel information is non-codebook-based comprises: a channel matrix recovered by a receiver of the channel information according to the channel information is unavailable to a transmitter of the channel information.

In one embodiment, a channel information is non-codebook-based comprises: the channel information is used for precoding, and the channel information does not comprise a codebook index.

In one embodiment, the measurement for the first RS resource group is used to generate a first matrix group, a first matrix group is used to generate the first channel information, and the first matrix group comprises at least one channel matrix.

In one embodiment, the first matrix group is only available for the first node.

In one embodiment, matrices in the first matrix group correspond one-to-one with sub-bands in the first frequency-band resource group.

In one embodiment, each matrix in the first matrix group is a raw channel matrix or comprises at least one eigenvector.

In one embodiment, the first node N1 transmits at least one CQI in step 102; the second node N1 receives at least one CQI in the step S202; herein, the at least one CQI is associated with the first channel information.

In one embodiment, the at least one CQI and the first channel information are transmitted on a same physical-layer channel.

In one embodiment, the at least one CQI comprises a broadband CQI.

In one embodiment, multiple CQIs comprised in the at least one CQI correspond one-to-one with multiple sub-bands in the first frequency-band resource group.

In one embodiment, the at least one CQI and the first channel information are configured by a same RRC IE.

In one embodiment, the same RRC IE is CSI-ReportConfig.

In one embodiment, the at least one CQI and the first channel information are configured by a same reportQuantity.

In one embodiment, the at least one CQI and the first channel information are conditioned on a same reported RI.

In one embodiment, the at least one CQI and the first channel information are calculated conditioned on a same reported RI being adopted.

In one embodiment, a calculation of any of the at least one CQI is conditional on a precoding matrix, and the precoding matrix is unknown to the second node N2.

The above embodiment avoids the use of a same decoder for the first node N1 and the second node N2, and avoids limiting the implementation algorithms of different equipment vendors.

In the above embodiment, if the at least one CQI comprises multiple CQIs, precoding matrices on which the multiple CQIs depend are not necessarily the same, which depend on channel parameters of sub-bands corresponding to multiple CQIs.

In one embodiment, the first channel information is non-codebook based, and the precoding matrix is codebook-based.

In one subembodiment of the above embodiment, the precoding matrix corresponds to a type I codebook index.

In one subembodiment of the above embodiment, the precoding matrix corresponds to a type II codebook index.

In one subembodiment of the above embodiment, the precoding matrix corresponds to an enhanced type II codebook index.

The above subembodiments provide a low bound CQI calculation method to ensure the robustness of MCS. In addition, the codebook search function in the existing UE can be utilized to simplify the hardware complexity.

Under the limitations of the above methods or embodiments, the specific algorithm used to calculate a CQI is determined by the manufacturer of the first node N1 itself, or is implemented related. The following describes a typical but non-restrictive implementation method:
the first node N1 first measures reference signal resources used for a channel measurement in the first RS resource group to obtain a channel parameter matrix H_{*r*×*t*}, where *r,t* are respectively a number of receiving antenna(s) and a number of antenna port(s) used for transmission respectively; under the condition that a pre-coding matrix W_{t×*l*} is adopted, a precoded channel parameter matrix is H_{r×}*ₜ ·* W_{t×*l*}, where *l* is a rank or a number of layer(s); an equivalent channel capacity of H_{r×*t*} · W_{t×*l*} is calculated adopting, for example, SINR (Signal Interference Noise Ratio), EESM (Exponential Effective SINR Mapping), or RBIR (Received Block mean mutual Information Ratio) criterion, and then, the CQI is determined by the equivalent channel capacity through methods such as table lookup. Generally speaking, the calculation of the equivalent channel capacity requires the first node N1 to estimate noise and interference, if the first RS resource group comprises RS resources used for an interference measurement, the first node N1 can use these RS resources to more accurately measure interference or noise. Generally speaking, the direct mapping of the equivalent channel capacity to CQI values depends on hardware related factors such as receiver performance or modulation methods. The first channel information is used to indicate a pre-coding matrix W_{t×*l*}.

For traditional PMI-based feedback, the first node N1 and the second node N2 have the same understanding of the precoding matrix W_{1×*l*}. When a type of the first channel information is non-codebook based, a precoding matrix recovered by the second node N2 according to the first channel information may not be exactly the same as the precoding matrix W_{t×*l*}.

### Embodiment 6

Embodiment 6 illustrates a schematic diagram of a candidate pattern according to one embodiment of the present application, as shown in FIG. 6. In FIG. 6, the blank square represents a sub-band, and the gray-filled square represents a sub-band in a candidate pattern.

In one embodiment, the candidate pattern is implicitly indicated by the first message. The first message is used to indicate a first condition set; the first condition set comprises that a frequency-domain interval of any adjacent two sub-bands is not greater than or less than a first frequency-domain width. A maximum value of a frequency-domain interval between any adjacent two sub-bands in FIG. 6 is shown by the bidirectional arrow A1. As long as the maximum value is not greater than (or less than) the first frequency-domain width, the candidate pattern satisfies the first condition set, that is, belongs to the candidate pattern set indicated by the first message.

In one embodiment, the first condition set comprises: a bandwidth covered from a lowest sub-band in frequency domain to a highest sub-band in frequency domain is not greater than or less than a second frequency-domain bandwidth; A bandwidth covered from a lowest sub-band in frequency domain to a highest sub-band in frequency domain in FIG. 6 is shown by the bidirectional arrow A2. As long as a bandwidth identified by the bidirectional arrow A2 is not greater than (or less than) the second frequency-domain bandwidth, the candidate pattern satisfies the first condition set, that is, it belongs to the candidate pattern set indicated by the first message.

### Embodiment 7

Embodiment 7 illustrates a schematic diagram of an artificial intelligence processing system according to one aspect of the present application, as shown in FIG.7. FIG. 7 comprises a first processor, a second processor, a third processor, and a fourth processor.

In Embodiment 7, the first processor transmits a first data set to the second processor, and the second processor generates a target first-type parameter group according to the first data set, the second processor transmits the generated target first-type parameter group to the third processor, and the third processor processes the second data set using the target first-type parameter group to obtain a first-type output, and then transmits the first-type output to the fourth processor.

In one embodiment, the third processor transmits a first-type feedback to the second processor, and the first-type feedback is used to trigger a recalculation or update of the target first-type parameter group.

In one embodiment, the fourth processor transmits a second-type feedback to the first processor, the second-type feedback is used to generate the first data set or the second data set, or the second-type feedback is used to trigger a transmission of the first data set or second data set.

In one embodiment, the first processor generates the first data set and the second data set according to a measurement for the first radio signal, and the first radio signal comprises a downlink RS.

In one embodiment, the second data set is obtained based on a measurement of the first RS resource group.

In one embodiment, the first processor and the third processor belong to the first node, and the fourth processor belongs to the second node.

In one embodiment, the first-type output comprises the first channel information.

In one embodiment, the second processor belongs to a first node.

The above embodiment avoids transmitting the first data set to the second node.

In one embodiment, the second processor belongs to the second node.

The above embodiments reduce the complexity of the first node.

In one embodiment, the first data set is training data, the second data set is interference data, the second processor is used to train the model, and the trained model is described by the target first-type parameter group.

The above training description is applicable to a first encoder, a first decoder, a first reference decoder, and so on in the present application.

In one embodiment, the third processor constructs a model according to the target first-type parameter set, and then inputs the second data set into the constructed model to obtain the first-type output, which is then transmitted to the fourth processor.

In one subembodiment of the above embodiment, the third processor comprises a first encoder of the present application, the first encoder is described by the target first-type parameter group, and a generation of the first-type output is executed by the first encoder.

In one embodiment, the third processor calculates an error between the first-type output and actual data to monitor the performance of the trained model (such as the first encoder); the actual data is data transmitted by the first processor received after the second data set.

In one subembodiment of the above embodiment, only when the sub-band pattern of the first frequency-band resource group conforms to the first condition set, the above first-type output used for monitoring performance comprises the first channel information.

The above embodiments are particularly suitable for predicting relevant reports.

In one embodiment, the third processor recovers a reference data set according to the first-type output, and an error between the reference data set and the second data set is used to generate the first-type feedback.

The recovery of the reference data set usually adopts an inverse operation similar to the target first-type parameter group, and the above embodiments are particularly suitable for CSI compression-related reports.

In one embodiment, the first-type feedback is used to reflect the performance of the trained model; when the performance of the trained model cannot meet requirements, the second processing opportunity recalculates the target first-type parameter group.

In one subembodiment of the above embodiment, the third processor comprises a first reference decoder of the present application, and the first reference decoder is described by the target first-type parameter group. An input of the first reference decoder comprises the first-type output, and an output of the first reference decoder comprises the reference data set.

Typically, when the error is too large or it is not updated for too long, the performance of the trained model is considered unsatisfactory.

In one embodiment, the third processor belongs to the second node, and the first node reports the target first-type parameter group to the second node.

### Embodiment 8

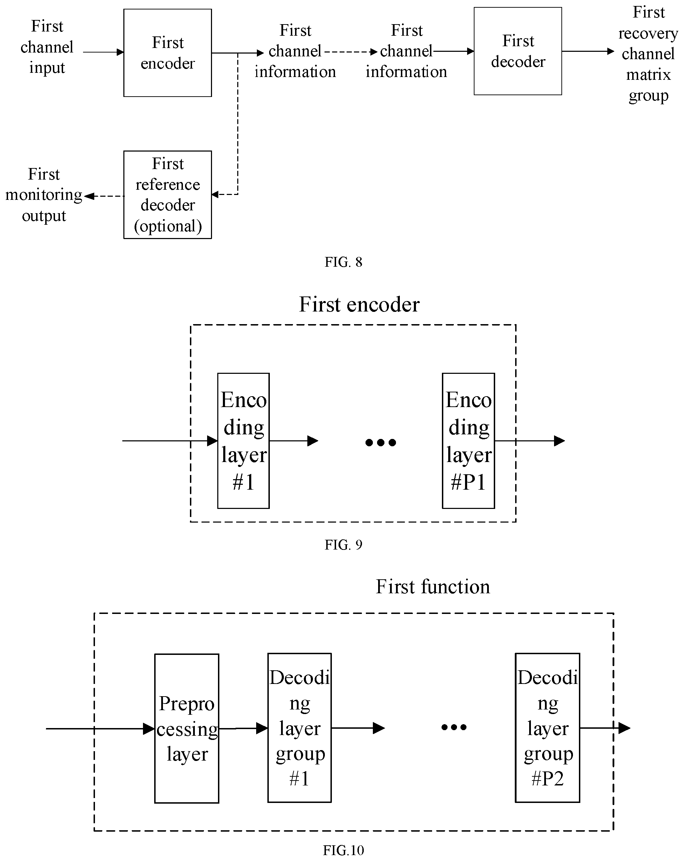

Embodiment 8 illustrates a flowchart of a transmission of first channel information according to one embodiment of the present application, as shown in FIG. 8. In FIG. 8, a first reference decoder is optional.

In Embodiment 8, a first encoder and a first decoder belong to a first node and a second node respectively; herein, the first encoder belongs to a first receiver, and the first decoder belongs to a second receiver.

The first receiver generates the at least first channel information using a first encoder; herein, an input of the first encoder comprises a first channel input, and the first encoder is obtained through training; the first channel input is obtained according to a measurement for a first RS resource group;
the first node feeds back first channel information to the second node through an air interface;
the second receiver generates a first recovery channel matrix group using a first decoder; herein, an input of the first decoder comprises the first channel information, and the first decoder is obtained through training.
the first encoder and the first decoder should theoretically be mutually inverse to ensure that the first channel input is the same as the first recovery channel matrix group.

In one embodiment, due to factors such as implementation complexity, radio overhead, or delay, the first encoder and the first decoder in embodiment 8 cannot ensure complete cancellation, therefore, the first channel input and the first recovery channel matrix group cannot be guaranteed to be exactly the same, resulting in the traditional CQI calculation method no longer being applicable (i.e. it is impossible to find a pre-coding matrix for calculating CQI that is understood to be the same by both parties).

In one embodiment, the first channel input is a raw channel matrix, or at least one eigenvector.

In one embodiment, the first channel input comprises the first matrix group in the present application.

In one embodiment, the first receiver further comprises a first reference decoder, an input of the first reference decoder comprises the first channel information, and an output of the first reference decoder comprises a first monitoring output; the first monitoring output is used to monitor the performance of the first encoder.

In one embodiment, the first monitoring output is used to calculate the at least one CQI in the present application, and the first reference decoder and the first decoder cannot be considered the same.

In the above embodiments, the first reference decoder and the first decoder may be independently generated or independently maintained, so that although they are both intended to perform the inverse operation of the first encoder, the two may be only approximate.

In one subembodiment of the above embodiment, the first reference decoder is similar to the first decoder, so that the CQI error incurred by the difference between the two is self-adjusted by the second node.

In one embodiment, the first receiver comprises the third processor of embodiment 7.

In one embodiment, the first channel input belongs to a second data set in embodiment 7.

In one embodiment, the training of the first encoder is performed at the first node.

In one embodiment, the training of the first encoder is performed by the second node.

In one embodiment, the first recovery channel matrix group is known only to the second node.

In one embodiment, the first recovery channel matrix group cannot be considered identical to the first matrix group.

### Embodiment 9

Embodiment 9 illustrates a schematic diagram of a first encoder according to one embodiment of the present application, as shown in FIG. 9. In FIG. 9, the first encoder comprises P1 encoding layers, namely encoding layers #1, #2, ..., #P1.

In one embodiment, P1 is 2, that is, the P1 encoding layers comprise encoding layer #1 and encoding layer #2, and the encoding layer #1 and the encoding layer #2 are convolutional layer and fully-connected layer respectively; in the convolutional layer, at least one convolutional kernel is used to convolve the first channel input to generate a corresponding feature map, and at least one feature map output by the convolutional layer is reshaped into a vector and input to the fully-connected layer; the fully-connected layer converts the vector into first channel information. For a more detailed description, refer to CNN-related technical literature, e.g., Chao-Kai Wen, Deep Learning for Massive MIMO CSI Feedback, IEEE WIRELESS COMMUNICATIONS LETTERS, VOL. 7, NO. 5, OCTOBER 2018 and etc.

In one embodiment, P1 is 3, that is, the P1 encoding layers comprise a fully-connected layer, a convolutional layer and a pooling layer.

### Embodiment 10

Embodiment 10 illustrates a schematic diagram of a first function according to one embodiment of the present application, as shown in FIG. 10. In FIG. 10, the first function comprises a pre-processing layer and P2 decoding layer groups, namely decoding layer groups #1, #2, ..., #P2. Each decoding layer group comprises at least one decoding layer.

The structure of the first function is applicable to a first decoder and a first reference decoder in embodiment 8.

In one embodiment, the pre-processing layer is a fully-connected layer that expands a size of the first channel information to a size of the first channel input.

In one embodiment, any two of the P2 decoding layer groups have a same structure, the structure comprises a number of decoding layers, a size of input parameters and a size of output parameters of each comprised decoding layer and etc.

In one embodiment, the second node indicatesP2 and the structure of the decoding layer group to the first node, and the first node indicates other parameters of the first function through the second signaling.

In one embodiment, the other parameters comprise at least one of a threshold of an activation function, a size of a convolution kernel, a step size of a convolution kernel, and a weight between feature maps.

### Embodiment 11

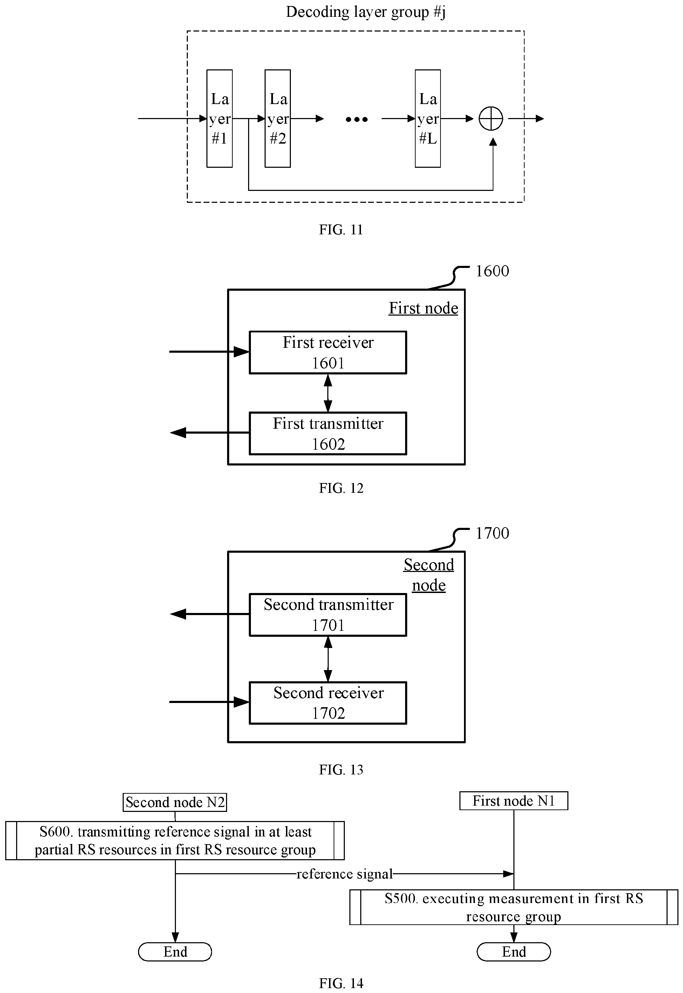

Embodiment 11 illustrates a schematic diagram of a decoding layer group according to one embodiment of the present application, as shown in FIG.11. In FIG 11, the decoding layer group #j comprises L layers, that is, layers #1, #2, ..., #L; the decoding layer group is any of the P2 decoding layer groups.

In one embodiment, L is 4, the first one layer of the L layers is an input layer, and the last three layers of the L layers are all convolutional layers, and for a more detailed description, refer to CNN-related technical literature, e.g., Chao-Kai Wen, Deep Learning for Massive MIMO CSI Feedback, IEEE WIRELESS COMMUNICATIONS LETTERS, VOL. 7, NO. 5, OCTOBER 2018 and etc.

In one embodiment, the L layers comprise at least one convolutional layer and one pooling layer.

### Embodiment 12

Embodiment 12 illustrates a structure block diagram of a processor in a first node according to one embodiment of the present application, as shown in FIG. 12. In FIG. 12, a processor 1600 in a first node comprises a first receiver 1601 and a first transmitter 1602.

The first transmitter 1602 transmits a first message, and the first message is used to determine a candidate pattern set; the first receiver 1601 receives a second message, the second message is used to indicate a first RS resource group and a first frequency-band resource group, the first RS resource group comprises at least one RS resource, the first frequency-band resource group comprises at least one sub-band; the first transmitter 1602 transmits first channel information;
in embodiment 12, the first message is used to assist in determining a sub-band pattern of the first frequency-band resource group, and a measurement of the first RS resource group is used to generate the first channel information; frequency-domain resources which the first channel information is for comprise the first frequency-band resource group.

In one embodiment, the first message is used to indicate a first condition set; the first condition set comprises that a frequency-domain interval of any adjacent two sub-bands is not greater than or less than a first frequency-domain width.

In one embodiment, the first condition set comprises: a number of sub-band(s) is not less than or greater than a first positive integer.

In one embodiment, the first condition set comprises: a bandwidth covered from a lowest sub-band in frequency domain to a highest sub-band in frequency domain is not greater than or less than a second frequency-domain bandwidth.

In one embodiment, only when the sub-band pattern of the first frequency-band resource group satisfies the first condition set, the first channel information is used to monitor the performance of the first encoder.

In one embodiment, the phrase that the first message is used to assist in determining a sub-band pattern of the first frequency-band resource group includes: only when the sub-band pattern of the first frequency-band resource group is one pattern in the candidate pattern set, the performance of the first channel information is guaranteed.

In one embodiment, the phrase that the first message is used to assist in determining a sub-band pattern of the first frequency-band resource group includes: the candidate pattern set is applicable to a first encoder; herein, the first encoder is used to generate the first channel information, and the measurement for the first RS resource group is used to acquire an input of the first encoder.

In one embodiment, the first transmitter 1602 transmits at least one CQI.

In one embodiment, the first node 1600 is a UE.

In one embodiment, the first transmitter 1602 comprises at least one of the antenna 452, the transmitter/receiver 454, the multi-antenna transmitting processor 457, the transmitting processor 468, the controller/processor 459, the memory 460 or the data source 467 in FIG. 4 of the present application.

In one embodiment, the first transmitter 1602 comprises the antenna 452, the transmitter/receiver 454, the multi-antenna transmitting processor 457, the transmitting processor 468, the controller/processor 459, the memory 460 and the data source 467 in FIG. 4 of the present application.

In one embodiment, the first receiver 1601 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first three of the antenna 452, the receiver 454, the multi-antenna receiving processor 458, the receiving processor 456, the controller/processor 459, the memory 460 and the data source 467 in FIG. 4 of the present application.

### Embodiment 13

Embodiment 13 illustrates a structure block diagram of a processor in a second node according to one embodiment of the present application, as shown in FIG. 13. In FIG. 13, a processor 1700 in the second node comprises a second transmitter 1701 and a second receiver 1702.

The second receiver 1702 receives a first message, and the first message is used to determine a candidate pattern set; the second transmitter 1701 transmits a second message, the second message is used to indicate a first RS resource group and a first frequency-band resource group, the first RS resource group comprises at least one RS resource, the first frequency-band resource group comprises at least one sub-band; the second receiver 1702 receives first channel information;
in embodiment 13, the first message is used to assist in determining a sub-band pattern of the first frequency-band resource group, and a measurement of the first RS resource group is used to generate the first channel information; frequency-domain resources which the first channel information is for comprise the first frequency-band resource group.

In one embodiment, the first message is used to indicate a first condition set; the first condition set comprises that a frequency-domain interval of any adjacent two sub-bands is not greater than or less than a first frequency-domain width.

In one embodiment, the first condition set comprises: a number of sub-band(s) is not less than or greater than a first positive integer.

In one embodiment, the first condition set comprises: a bandwidth covered from a lowest sub-band in frequency domain to a highest sub-band in frequency domain is not greater than or less than a second frequency-domain bandwidth.

In one embodiment, only when the sub-band pattern of the first frequency-band resource group conforms to the first condition set, the first channel information is used to monitor the performance of the first encoder.

In one embodiment, the phrase that the first message is used to assist in determining a sub-band pattern of the first frequency-band resource group includes: only when the sub-band pattern of the first frequency-band resource group is one pattern in the candidate pattern set, the performance of the first channel information is guaranteed.

In one embodiment, the phrase that the first message is used to assist in determining a sub-band pattern of the first frequency-band resource group includes: the candidate pattern set is applicable to a first encoder; herein, the first encoder is used to generate the first channel information, and the measurement for the first RS resource group is used to acquire an input of the first encoder.

In one embodiment, the second receiver 1702 receives at least one CQI.

In one embodiment, the second node 1700 is a base station.

In one embodiment, the second transmitter 1701 comprises the antenna 420, the transmitter 418, the transmitting processor 416 and the controller/processor 475.

In one embodiment, the second transmitter 1701 comprises the antenna 420, the transmitter 418, the multi-antenna transmitting processor 471, the transmitting processor 416 and the controller/processor 475.

In one embodiment, the second transmitter 1701 comprises the antenna 420, the transmitter 418, the transmitting processor 416 and the controller/processor 475.

In one embodiment, the second transmitter 1701 comprises the antenna 420, the transmitter 418, the multi-antenna transmitting processor 471, the transmitting processor 416 and the controller/processor 475.

In one embodiment, the second receiver 1702 comprises the antenna 420, the receiver 418, the multi-antenna receiving processor 472, the receiving processor 470 and the controller/processor 475.

In one embodiment, the second receiver 1702 comprises the controller/processor 475.

### Embodiment 14

Embodiment 14 illustrates a flowchart of performing a measurement in a first RS resource group according to one embodiment of the present application, as shown in FIG. 14.

The first node N1 performs a measurement in a first RS resource group in step S500; the second node N2 transmits a reference signal in at least partial RS resources in the first RS resource group.

In one embodiment, the at least partial RS resources comprise RS resources used for a channel measurement.

The specific implementation of the measurement performed by the first node N1 in the first RS resource group is at the discretion of the hardware device vendor, and a non-restrictive example is given below:
the first node measures a channel parameter matrix for each PRB, the channel parameter matrix being of Nt rows and Nr columns, where each element is a channel impulse response; the Nt and and the Nr are a number of antenna port(s) and a number of receiving antenna(s) in an RS resource, respectively; the first node combines channel parameter matrices measured on all PRBs within each sub-band to obtain a channel matrix for each sub-band. An input to a first encoder comprises a channel matrix for partial or all sub-bands in the first frequency-band resource group, or, an input to a first encoder (or the first matrix group in the present application) comprises an eigenvector of a channel matrix for partial or all sub-bands in the first frequency-band resource group.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The user equipment, terminal and UE include but are not limited to Unmanned Aerial Vehicles (UAVs), communication modules on UAVs, telecontrolled aircrafts, aircrafts, diminutive airplanes, mobile phones, tablet computers, notebooks, vehicle-mounted communication equipment, wireless sensors, network cards, Internet of Things (IoT) terminals, RFID terminals, NB-IOT terminals, Machine Type Communication (MTC) terminals, enhanced MTC (eMTC) terminals, data card, network cards, vehicle-mounted communication equipment, low-cost mobile phones, low-cost tablets and other wireless communication devices. The UE and terminal in the present application include but not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things, RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first transmitter, transmitting a first message, the first message being used to determine a candidate pattern set; transmitting first channel information;
a first receiver, receiving a second message, the second message being used to indicate a first RS (Reference Signal) resource group and a first frequency-band resource group, the first RS resource group comprising at least one RS resource, the first frequency-band resource group comprising at least one sub-band;
wherein the first message is used to assist in determining a sub-band pattern of the first frequency-band resource group, and a measurement of the first RS resource group is used to generate the first channel information; frequency-domain resources which the first channel information is for comprise the first frequency-band resource group.

2. The first node according to claim 1, wherein the first message is used to indicate a first condition set; the first condition set comprises that a frequency-domain interval of any adjacent two sub-bands is not greater than or less than a first frequency-domain width.

3. The first node according to claim 2, wherein the first condition set comprises: a number of sub-band(s) is not less than or greater than a first positive integer.

4. The first node according to any of claim 2 or 3, wherein the first condition set comprises: a bandwidth covered from a lowest sub-band in frequency domain to a highest sub-band in frequency domain is not greater than or less than a second frequency-domain bandwidth.

5. The first node according to any of claims 2-4, wherein only when the sub-band pattern of the first frequency-band resource group conforms to the first condition set, the first channel information is used to monitor the performance of the first encoder.

6. The first node according to any of claims 1-5, wherein the phrase that the first message is used to assist in determining a sub-band pattern of the first frequency-band resource group includes: only when the sub-band pattern of a first frequency-band resource group is one pattern in the candidate pattern set, the performance of the first channel information is guaranteed.

7. The first node according to any of claims 1-6, wherein the phrase that the first message is used to assist in determining a sub-band pattern of the first frequency-band resource group includes: the candidate pattern set is applicable to a first encoder; wherein the first encoder is used to generate the first channel information, and the measurement for the first RS resource group is used to acquire an input of the first encoder.

8. A second node for wireless communications, comprising:
a second receiver, receiving a first message, the first message being used to determine a candidate pattern set; receiving first channel information; and
a second transmitter, transmitting a second message, the second message being used to indicate a first RS resource group and a first frequency-band resource group, the first RS resource group comprising at least one RS resource, the first frequency-band resource group comprising at least one sub-band;
wherein the first message is used to assist in determining a sub-band pattern of the first frequency-band resource group, and a measurement of the first RS resource group is used to generate the first channel information; frequency-domain resources which the first channel information is for comprise the first frequency-band resource group.

9. The second node according to claim 8, wherein the first message is used to indicate a first condition set; the first condition set comprises that a frequency-domain interval of any adjacent two sub-bands is not greater than or less than a first frequency-domain width.

10. The second node according to claim 9, wherein the first condition set comprises: a number of sub-band(s) is not less than or greater than a first positive integer.

11. The second node according to any of claim 9 or 10, wherein the first condition set comprises: a bandwidth covered from a lowest sub-band in frequency domain to a highest sub-band in frequency domain is not greater than or less than a second frequency-domain bandwidth.

12. The second node according to any of claims 9-11, wherein only when the sub-band pattern of the first frequency-band resource group conforms to the first condition set, the first channel information is used to monitor the performance of the first encoder.

13. The second node according to any of claims 8-12, wherein the phrase that the first message is used to assist in determining a sub-band pattern of the first frequency-band resource group includes: only when the sub-band pattern of a first frequency-band resource group is one pattern in the candidate pattern set, the performance of the first channel information is guaranteed.

14. The second node according to any of claims 8-13, wherein the phrase that the first message is used to assist in determining a sub-band pattern of the first frequency-band resource group includes: the candidate pattern set is applicable to a first encoder; wherein the first encoder is used to generate the first channel information, and the measurement for the first RS resource group is used to acquire an input of the first encoder.

15. A method in a first node for wireless communications, comprising:
transmitting a first message, the first message being used to determine a candidate pattern set;
receiving a second message, the second message being used to indicate a first RS resource group and a first frequency-band resource group, the first RS resource group comprising at least one RS resource, the first frequency-band resource group comprising at least one sub-band; and
transmitting first channel information;
wherein the first message is used to assist in determining a sub-band pattern of the first frequency-band resource group, and a measurement of the first RS resource group is used to generate the first channel information; frequency-domain resources which the first channel information is for comprise the first frequency-band resource group.

16. The method in a first node according to claim 15, wherein the first message is used to indicate a first condition set; the first condition set comprises that a frequency-domain interval of any adjacent two sub-bands is not greater than or less than a first frequency-domain width.

17. The first node according to claim 16, wherein the first condition set comprises: a number of sub-band(s) is not less than or greater than a first positive integer.

18. The method in a first node according to any of claim 16 or 17, wherein the first condition set comprises: a bandwidth covered from a lowest sub-band in frequency domain to a highest sub-band in frequency domain is not greater than or less than a second frequency-domain bandwidth.

19. The method in a first node according to any of claims 16-18, wherein only when the sub-band pattern of the first frequency-band resource group conforms to the first condition set, the first channel information is used to monitor the performance of the first encoder.

20. The method in a first node according to any of claims 15-19, wherein the phrase that the first message is used to assist in determining a sub-band pattern of the first frequency-band resource group includes: only when the sub-band pattern of a first frequency-band resource group is one pattern in the candidate pattern set, the performance of the first channel information is guaranteed.

21. The method in a first node according to any of claims 15-20, wherein the phrase that the first message is used to assist in determining a sub-band pattern of the first frequency-band resource group includes: the candidate pattern set is applicable to a first encoder; wherein the first encoder is used to generate the first channel information, and the measurement for the first RS resource group is used to acquire an input of the first encoder.

22. A method in a second node for wireless communications, comprising:
receiving a first message, the first message being used to determine a candidate pattern set;
transmitting a second message, the second message being used to indicate a first RS resource group and a first frequency-band resource group, the first RS resource group comprising at least one RS resource, the first frequency-band resource group comprising at least one sub-band; and
receiving first channel information;
wherein the first message is used to assist in determining a sub-band pattern of the first frequency-band resource group, and a measurement of the first RS resource group is used to generate the first channel information; frequency-domain resources which the first channel information is for comprise the first frequency-band resource group.

23. The method in a second node according to claim 22, wherein the first message is used to indicate a first condition set; the first condition set comprises that a frequency-domain interval of any adjacent two sub-bands is not greater than or less than a first frequency-domain width.

24. The method in a second node according to claim 23, wherein the first condition set comprises: a number of sub-band(s) is not less than or greater than a first positive integer.

25. The method in a second node according to any of claim 23 or 24, wherein the first condition set comprises: a bandwidth covered from a lowest sub-band in frequency domain to a highest sub-band in frequency domain is not greater than or less than a second frequency-domain bandwidth.

26. The method in a second node according to any of claims 23-25, wherein only when the sub-band pattern of the first frequency-band resource group conforms to the first condition set, the first channel information is used to monitor the performance of the first encoder.

27. The method in a second node according to any of claims 22-26, wherein the phrase that the first message is used to assist in determining a sub-band pattern of the first frequency-band resource group includes: only when the sub-band pattern of a first frequency-band resource group is one pattern in the candidate pattern set, the performance of the first channel information is guaranteed.

28. The method in a second node according to any of claims 22-27, wherein the phrase that the first message is used to assist in determining a sub-band pattern of the first frequency-band resource group includes: the candidate pattern set is applicable to a first encoder; wherein the first encoder is used to generate the first channel information, and the measurement for the first RS resource group is used to acquire an input of the first encoder.
